Europäisches Patentamt

(19) European Patent Office

Office européen des brevets

(11) Veröffentlichungsnummer: **0 109 584**
B1

(12) # EUROPÄISCHE PATENTSCHRIFT

(45) Veröffentlichungstag der Patentschrift:
**19.11.87**

(51) Int. Cl.⁴: **H 02 B 1/08**

(21) Anmeldenummer: **83110694.3**

(22) Anmeldetag: **26.10.83**

(54) **Einschub für elektrische Anlagenschränke sowie darin anordenbare Leistungssteckelemente.**

(30) Priorität: **22.11.82 DE 3243064**

(43) Veröffentlichungstag der Anmeldung:
**30.05.84 Patentblatt 84/22**

(45) Bekanntmachung des Hinweises auf die Patenterteilung:
**19.11.87 Patentblatt 87/47**

(84) Benannte Vertragsstaaten:
**AT CH DE LI NL SE**

(56) Entgegenhaltungen:
**DE - A - 2 515 152**
**FR - A - 1 495 240**

(73) Patentinhaber: **BBC Aktiengesellschaft Brown, Boveri & Cie., Haselstrasse, CH-5401 Baden (CH)**

(72) Erfinder: **Grass, Hermann, Grenzhofer Strasse 76, D-6803 Edingen (DE)**
Erfinder: **Hammermüller, Otto, Rembrandtstrasse 7, D-6805 Heddesheim (DE)**
Erfinder: **Beckenbach, Gerhard, Schubertstrasse 2, D-6945 Hirschberg (DE)**
Erfinder: **Florig, Hans-Friedrich, Am Binsenberg 6, D-6943 Birkenau (DE)**

(74) Vertreter: **Kempe, Wolfgang, Dr. et al, c/o BROWN, BOVERI & CIE AG ZPT Postfach 351, D-6800 Mannheim 31 (DE)**

EP 0 109 584 B1

## Beschreibung

Die Erfindung bezieht sich auf einen Einschub für elektrische Anlagenschränke, enthaltend ein Bodenteil, eine Frontplatte sowie eine Rückwandung und gegebenenfalls weitere Wandungen zur oberen und seitlichen Abdeckung, wobei die Rückwandung ausser der Abdeckung des Einschubinneren auch noch der Halterung von Vielfach-Steckleisten für Steuerleitungen und der Halterung oder Führung von Steckelementen für Leistungszu- und -abführungen dient und mit Öffnungen für deren Durchtritt versehen ist; ausserdem bezieht sich die Erfindung auch noch auf die Ausführung der zuordenbaren Leistungssteckelemente.

Seit vielen Jahren findet im elektrischen Anlagenbau mit gutem Erfolg die sogenannte Einschubtechnik Anwendung. Dieses ist insbesondere der Fall bei elektrischen Anlagen zur Steuerung, Regelung und Überwachung von Grossanlagen wie beispielsweise Kraftwerken, Netzverteilerstationen und Fabrikationsbetrieben, ebenso aber auch bei Sendeanstalten, Verkehrsleitsystemen und schliesslich auch in der Computertechnik. Innerhalb der einzelnen Einschübe sind bis vor einiger Zeit fast ausschliesslich Baugruppen und Bauelemente angeordnet worden, deren Stromversorgung relativ geringer elektrischer Leistungen bedurfte, so dass die elektrische Verbindung des eingeschobenen Einschubes mit den im Anlagenschrank angeordneten Leitungen in aller Regel ausschliesslich mittels Vielfach-Steckleisten erfolgen konnte, d.h. also mit mehrpoligen Steckerleisten und Buchsenleisten. Hierbei sind üblicherweise an der Rückwandung des Einschubes eine oder mehrere Steckerleisten befestigt, welche beim Einschieben des Einschubes in den zugeordneten Anlagenschrank in Buchsenleisten eindringen, welche im rückwärtigen Bereich der Anlagenschränke gehalten sind.

Da die Einschubtechnik einen schnellen und bequemen Zugriff zu den einzelnen Funktionselementen beziehungsweise Baugruppen gestattet und darüberhinaus ein schnelles Auswechseln der einzelnen Einschübe gegen bereitstehende Ersatzeinschübe es möglich macht, Ausfälle einzelner Elemente oder Baugruppen schnellstens zu beheben, geht man neuerdings mehr und mehr dazu über, innerhalb solcher Einschübe auch Bauelemente und Baugruppen anzuordnen, welche mit durchaus grösseren elektrischen Leistungen versorgt werden müssen beziehungsweise im Leitungsverlauf solcher Leistungsstränge angeordnet sind, beispielsweise also Leistungsschalter für hohe elektrische Ströme. Die Zufuhr und auch Abfuhr grösserer elektrischer Leistungen zu beziehungsweise von den Einschüben ist in solchen Fällen nicht mehr mit den üblichen Vielfach-Steckleisten zu bewältigen, vielmehr bedarf es hierfür durchaus grösserer Steckelemente, die meistens auch als Einzelelemente verwendet werden, d.h. also nicht als mehrpolige Steckvorrichtungen.

Einhergehend mit der Vergrösserung der aufzunehmenden elektrischen Leistungen mittels solcher Leistungs-Steckelemente wachsen nun auch die Reibungskräfte, welche beim Einfügen und auch beim Herausziehen der einzelnen Einschübe aufzubringen sind, was nun wiederum eine besonders stabile Halterung und Befestigung der einzelnen Steckelemente erfordert. Hierbei müssen diese Halterungen sowohl Druckkräfte als auch Zugkräfte aufnehmen können und gleichzeitig so ausgelegt und bemessen sein, dass sie auch grössere Temperaturbelastungen beziehungsweise Temperaturwechsel schadlos überdauern können. Ausserdem ist es in aller Regel erforderlich oder wenigstens wünschenswert, die genannten Steckelemente mit einem Berührungsschutz zu versehen, und zwar sowohl zur menschlichen Sicherheit also auch zur Vermeidung eines durch andere Bauelemente oder Leitungen verursachten Kurzschlusses, dessen zerstörerische Auswirkungen weitaus folgenschwerer sein können, als dieses bei einem Kurzschluss innerhalb der Steuerleitungen der Fall ist.

Aufgabe der vorliegenden Erfindung ist es, für einen Einschub der genannten Art eine vorteilhafte und dennoch preiswürdige und einfach zu montierende Anordnung und Halterung für Leistungs-Steckelemente anzugeben und auch hierfür geeignete Steckelemente zu schaffen, welche den gestellten Anforderungen genügen.

Was den Einschub betrifft, so wird dieses Ziel erfindungsgemäss dadurch erreicht, dass nahe der in das Einschubinnere gerichteten Wandungsfläche der Rückwandung wenigstens eine zusätzliche Abdeckwandung fest im Einschub angeordnet wird und dass zwischen dieser Abdeckwandung und der Rückwandung die Steckelemente für die Leistungszu- und abführungen sowie daran befestigte Enden von Stromleitern anordenbar und in ihrer Lage fixierbar sind, wobei die Abdeckwandung mindestens der zusätzlichen Lagefixierung, Halterung oder Abstützung der Steckelemente dient. Die Schaffung einer zusätzlichen Abdeckwandung vermag nicht nur einen wirkungsvollen Berührungsschutz zu bieten, sondern darüberhinaus ist sie auch dazu geeignet, die auftretenden Schubkräfte der Steckelemente beim Einfügen des Einschubes in einen Anlagenschrank aufzufangen, wohingegen die Zugkräfte beim Herausziehen des Einschubes von der Rückwandung aufgefangen werden können. Ausserdem kann eine derartige Abdeckwandung auch der zusätzlichen Versteifung und Biegesicherung der Rückwandung dienen, was der Verwindungssteifigkeit des gesamten Einschubes zugute kommt.

Eine vorteilhafte Weiterbildung des Erfindungsgedankens ist in dem Vorschlag zu sehen, wenigstens an einer der einander zugekehrten Wandungsflächen der Rückwandung und der Abdeckwandung, und zwar in deren äusseren Randungsbereich, einen vorspringenden Kragen anzuformen, welcher sich längs der beiden seitlichen Wandungen und der oberen Randung erstreckt und so – in miteinander montierter Lage von Abdeckwandung und Rückwandung – eine nach unten hin offene Kammer bildet. Auf diese Weise ist die Berührungssicherheit noch weiter verbessert und gleichzeitig weitgehend verhindert, dass ein Kurzschluss im Bereich der Steckelemente nachteilige Auswirkungen auf andere Bauelemente beziehungsweise Baugruppen innerhalb des Einschubes ausüben kann.

In weiterer Ausgestaltung des zuletzt genannten Gedankens der Kragenbildung wird vorgeschlagen, an wenigstens einer der einander zugekehrten Wandungsflächen der Rückwandung und der Abdeckwandung wenigstens einen Trennsteg anzuformen, welcher an den Kragen angrenzt, etwa das gleiche Höhenmass wie dieser aufweist und der Bildung wenigstens zweier Kammern dient. Auf diese Weise ist auch eine Trennung beispielsweise des Raumes für die Aufnahme der der Leistungszuführung dienenden Steckelemente von denen für die Leistungsabführung möglich oder – bei der Anordnung mehrere Trennstege – sogar eine Kammerbildung für jede einzelne Phase.

Einer anderen Ausgestaltung zufolge wird vorgeschlagen, an wenigstens einer der einander zugekehrten Wandungsflächen der Abdeckwandung und der Rückwandung Ausformungen in Gestalt von Stegen, Nocken, Nuten, Aussparungen oder dergleichen anzuordnen, welche der unmittelbaren Halterung und Lagefixierung der aufzunehmenden Steckelemente dienen. Durch derartige Massnahmen ist es möglich, auf weitere Befestigungselemente zur Halterung und Lagefixierung der einzelnen Steckelemente ganz zu verzichten, was auch noch den Vorteil hat, dass Temperaturwechsel auf die Halterung praktisch keinen Einfluss haben. Beim Vorhandensein eines Kragens an der Abdeckwandung und/oder an der Rückwandung, wie solches oben bereits vorgeschlagen worden ist, ist es zweckmässig, die eben genannten Ausformungen zur Halterung und Lagefixierung der Steckelemente ausschliesslich innerhalb der vom Kragen weitgehend umschlossenen Wandungsfläche anzuordnen, um die erwünschte Berührungssicherheit wirklich zu gewährleisten.

Der Erleichterung und Vereinfachung der Montage dient ein anderer Ausgestaltungsvorschlag, nämlich die Abdeckwandung und die Rückwandung mit Hilfe von angeformten oder angegliederten Rastmitteln miteinander zu verbinden, und zwar die Verbindung ausschliesslich mit diesen Rastmitteln vorzusehen oder ihre Verrastung miteinander zusätzlich zu anderen Verbindungsmassnahmen vorzusehen. Auch dann, wenn für die Verbindung zwischen Abdeckwandung und Rückwandung noch andere Verbindungsmassnahmen vorgesehen sind, beispielsweise eine Verschraubung, ist die vorgeschlagene Rastmöglichkeit immer noch von Vorteil, nämlich mindestens eine Erleichterung bei der Montage und ausserdem eine zusätzliche Sicherheit, falls die anderen Verbindungsmassnahmen nicht vorschriftsmässig getroffen worden sind. Zweckmässig ist es, die Rastmittel in Form von Rastnasen, Rastöffnungen oder dergleichen auszubilden, welche unmittelbar von dem bereits genannten Kragen ausgehen beziehungsweise daran angeformt sind, oder diese Rastmittel mindestens nahe des Kragens vorzusehen, d.h. also im äusseren Randungsbereich der Abdeckwandung und der Rückwandung. Auf diese Weise sind die genannten Rastmittel nicht nur preisgünstig herzustellen, sondern auch gut zugänglich für den Fall, dass die Abdeckwandung (beispielsweise zu Inspektionszwecken) von der Rückwandung entfernt werden soll.

In die dieser Erfindung zugrundeliegenden Aufgabenstellung ist, wie eingangs formuliert, auch die Schaffung eines vorteilhaften Steckelementes für den genannten Zweck mit einbegriffen. Ein solches ist erfindungsgemäss dadurch gegeben, dass es als im wesentlichen ebenes Stanzteil mit einem Aufnahmeschlitz für eine Stromschiene oder ein Gegensteckelement ausgebildet und mit einer – bezogen auf den Längsverlauf des Aufnahmeschlitzes – seitlich angeformten Hülse für die Aufnahme des Endes eines Kabels versehen ist, wobei die Mittelachse der Hülse quer zur Längsachse des Aufnahmeschlitzes verläuft. Ein derartiges Steckelement gestattet es, den Raum zwischen der Abdeckwandung und der Rückwandung relativ schmal auszubilden und zugleich eine günstige Kabelzufuhr beziehungsweise -abführung zu erzielen. Je nach Einbaulage des Steckelementes kann es zudem vorteilhaft sein, die seitlich angeformte Hülse gegenüber der Erstreckungsebene des mit dem Aufnahmeschlitz versehenen Bereiches abzuwinkeln, so dass die Mittelachse der Hülse etwa senkrecht zur genannten Erstreckungsebene verläuft. Hierdurch ist es möglich, Länge und Verlauf der Kabelführung vorteilhaft zu beeinflussen.

Im übrigen wird vorgeschlagen, im Bereich des Aufnahmeschlitzes des Steckelementes eine gespannte Bügelfeder oder eine aufgetrennte Ringfeder anzuordnen, deren Federkraft einer Aufweitung des Aufnahmeschlitzes entgegenwirkt; nicht unerwähnt bleibe, dass die Anordnung derartiger Bügel- beziehungsweise Ringfedern an sich bekannt ist.

Schliesslich wird vorgeschlagen, das Steckelement an seinem dem Aufnahmeschlitz entgegengerichteten Ende mit einem Führungszapfen oder – stattdessen – mit einer Führungsnut zu versehen, wodurch die Lagefixierung und auch Abstützung des Steckelementes durchaus verbesserbar ist.

Anhand figürlicher Darstellungen von Ausführungsbeispielen des Erfindungsgegenstandes und der nachfolgenden Beschreibung hierzu sollen der Erfindungsgedanke und seine Ausbildungsmöglichkeiten noch einmal erläutert werden.

Es zeigt:

Fig. 1 in perspektivischer Sicht einen teilweise auseinandergenommenen Einschub,

Fig. 2 in gegenüber der Darstellung in Figur 1 vergrössertem Massstab und perspektivischer Sicht eine Explosionsdarstellung der kompletten Rückwandung des Einschubes,

Fig. 3 eine senkrechte Sicht auf die der Rückwandung zuzukehrende Wandungsfläche einer der Rückwandung zugeordneten Abdeckwandung,

Fig. 4 die Darstellung eines entlang der Schnittlinie A-B verlaufenden Schnittes durch die in Fig. 3 gezeigte Abdeckwandung,

Fig. 5 ein gegenüber der Darstellung in Figur 2 vergrössert gezeichnetes Steckelement und seine Angliederung an eine Abdeckwandung,

Fig. 6, 7 eine senkrechte und eine perspektivische Sicht auf ein anders geformtes Steckelement als es in der Figur 5 gezeigt ist und

Fig. 8 eine gegenüber der in Figur 2 gezeigten Konstruktion etwa doppelt so breite Rückwandung mit zwei angegliederten Abdeckwandungen sowie zugeordnete Steckelemente, wiederum in perspektivischer Explosionsdarstellung.

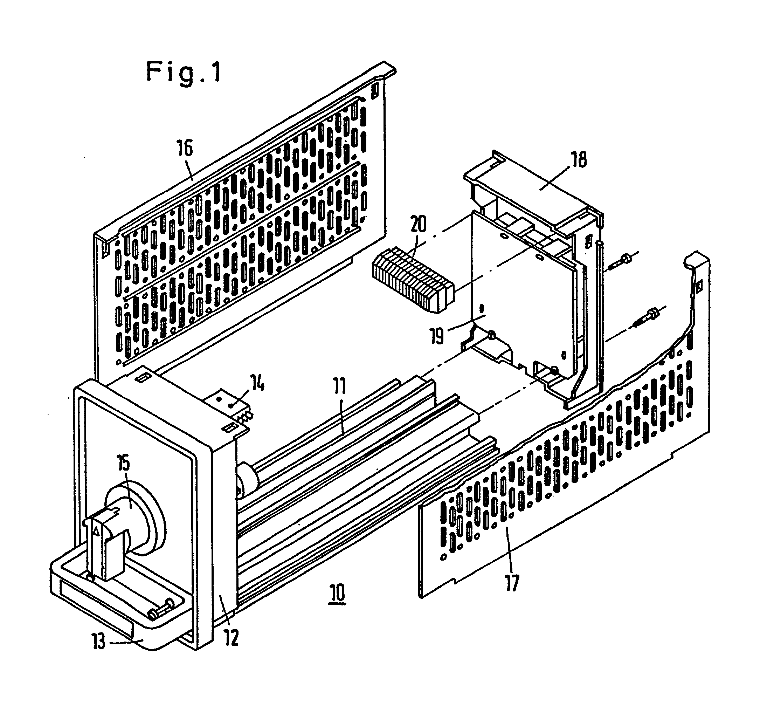

Die Darstellung in Figur 1 veranschaulicht den prinzipiellen Aufbau eines Einschubes 10, welcher sich zusammensetzt aus einem Bodenteil 11, einer Frontwandung 12 mit daran befestigtem Griff 13 und einem zu einem Leistungsschalter bzw. zu einem Verriegelungsmechanismus 14 für einen Leistungsschalter gehörenden Betätigungsknebel 15, weiterhin aus Seitenwandungen 16 und 17 und schliesslich aus einer Rückwandung 18, welche erfindungsgemäss kombiniert ist mit einer Abdeckwandung 19. Getrennt von der Rückwandung 18 gezeigt ist eine Vielfach-Steckleiste 20, welche der Rückwandung 18 anzugliedern ist.

Die Darstellung des gesamten Einschubes 10 beziehungsweise seiner wesentlichen Teile, aus denen er sich zusammensetzt, soll lediglich dem besseren Verständnis dafür dienen, auf welchen Bereich des Einschubes sich die Erfindung bezieht, nämlich auf diejenige Baugruppe, welche sich aus der Rückwandung 18 und der Abdeckwandung 19 zusammensetzt.

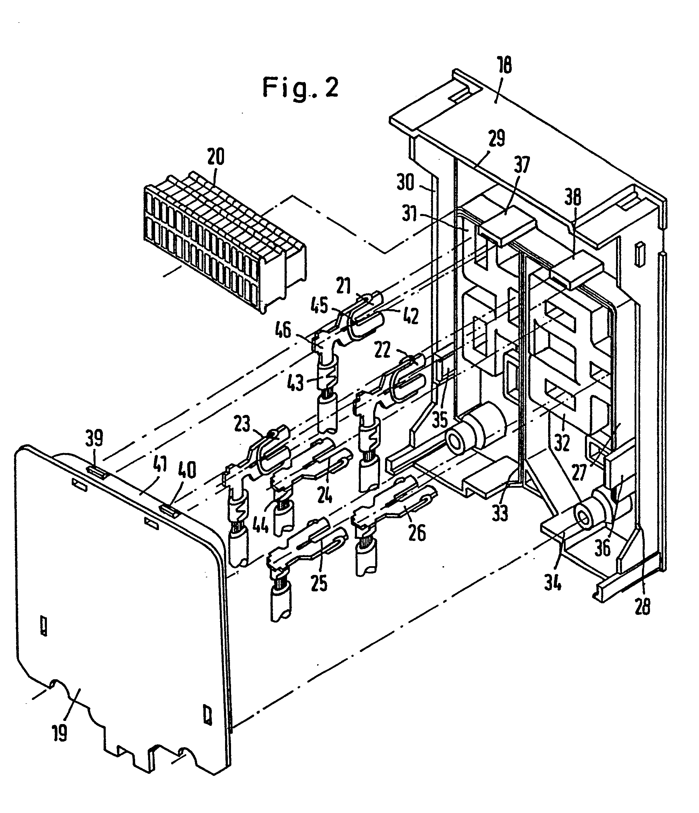

Diese Baugruppe ist – gegenüber der Figur 1 vergrössert und auch auseinandergezogen dargestellt – in Figur 2 noch einmal gezeigt. Erkennbar wiederum die Rückwandung 18 und die Abdeckwandung 19, die bereits erwähnte Vielfach-Steckleiste 20 und nun auch zwischen der Rückwandung 18 und der Abdeckwandung 19 angeordnete Steckelemente 21 bis 26 mit davon ausgehenden (nicht bezifferten) Kabelenden. Während die Vielfach-Steckleiste 20 dem Anschluss von elektrisch vergleichsweise gering belasteten Steuer- oder Signalleitungen dient, handelt es sich bei den Steckelementen 21 bis 26 um solche für die Übertragung höherer elektrischer Leistungen, wobei im vorliegenden Falle die Steckelemente 21 bis 23 der Leistungszufuhr dienen, die Steckelemente 24 bis 26 hingegen der Abführung der Leistung, die also durch den in Figur 1 angedeuteten Leistungsschalter 14 unterbrochen und auch wieder zugeschaltet werden kann. In dieser Darstellung erkennbar ist ein Kragen 27 an der Rückwandung 18, welcher sich parallel zu Aussenrandungen 28, 29 und 30 dieser Rückwandung 18 – von diesen Aussenrandungen in einem gewissen Abstand – erstreckt und Ausformungen 31 für die Aufnahme, Durchführung und Lagefixierung der Leistungs-Steckelemente 21 bis 32 sowie weitere Ausformungen 32 für die aufzunehmenden Steckelemente 24 bis 26 umgibt. Ausserdem ist ein Trennsteg 33 erkennbar, welcher an seinem in der Darstellung nach oben weisenden Ende an den besagten Kragen 27 angrenzt, an seinem entgegengesetzten, nach unten gerichteten Ende hingegen an eine untere Aussenrandung 34 der Rückwandung 18 ragt beziehungsweise in diese übergeht.

Die Befestigung der Abdeckwandung 19 an der Rückwandung 18 kann durch entsprechende Schraubverbindungen erfolgen, durch mit Rastverbindungen kombinierte Schraubverbindungen oder, wie im vorliegenden Falle vorgesehen, lediglich durch Verrastung miteinander. Im dargestellten Falle sind am Kragen 27 der Rückwandung 18 seitlich Rastmittel 35 und 36 angeformt und im horizontal verlaufenden Bereich des Kragens 27 weitere Rastmittel 37 und 38. Die letztgenannten wirken mit korrespondierenden Rastmitteln 39 und 40 zusammen, welche an der Abdeckwandung 19 beziehungsweise einem davon ausgehenden Kragen 41 ausgeformt sind. Die mit den Rastmitteln 35 und 36 der Rückwandung 18 zusammenwirkenden Rastmittel an der Abdeckwandung 19 sind in dieser Darstellung nicht erkennbar.

In Betracht gezogen seien an dieser Stelle noch einmal die Steckelemente 21 bis 26. Sie weisen eine im wesentlichen ebene Formgebung auf und sind mit je einem Aufnahmeschlitz (am Steckelemente 21 der Aufnahmeschlitz 42) versehen, welch letzterer der Aufnahme einer Stromschiene oder eines ähnlichen Kontaktgliedes dient. Ausserdem sind sie mit je einer – bezogen auf den Längsverlauf des Aufnahmeschlitzes (42) – seitlich angeformten Hülse versehen (beim Steckelement 21 die Hülse 43), deren Mittelachse quer zur Längsachse des Aufnahmeschlitzes (42) verläuft. Diese Hülsen (43) dienen der Aufnahme von (nicht bezifferten) Kabelenden, wie die Darstellung erkennen lässt. Bei den der Leistungszufuhr dienenden Steckelementen 21 bis 23 ist eine vertikale Anordnung ihrer wesentlichen Erstreckungsebene vorgesehen, und zwar derart, dass die genannten Hülsen (43) jeweils zur Bodenseite des Einschubes gerichtet sind. Anders sind die der Leistungsabführung dienenden Steckelemente 24 bis 26 gelegen, nämlich deren wesentliche Erstreckungsebene verläuft horizontal. Im Unterschied zu den Leistungs-Steckelementen 21 und 23 ist bei den horizontal gelegenen Steckelementen 24 bis 26 noch eine Abwinkelung ihrer Hülsen (siehe die Hülse 44 am Steckelement 24) vorgesehen, derart, dass deren Mittelachsen etwa senkrecht zur Erstreckungsebene der Steckelemente stehen. Auf diese Weise ist auch bei den letztgenannten Steckelementen 24 bis 26 eine Aufnahme von vertikal abgehenden Kabelenden möglich. Erwähnt sei noch, dass alle Steckelemente 21 bis 26 mit im Bereich ihrer Aufnahmeschlitze angeordneten gespannten Bügelfedern (am Steckelement 21 die Bügelfeder 45) ausgestattet sind, deren Federkraft und Vorspannung einer Aufweitung des jeweiligen Aufnahmeschlitzes entgegenwirken. An ihren den Aufnahmeschlitzen entgegengerichteten Enden weisen die Steckelemente 21 bis 26 jeweils einen Führungszapfen (am Steckelement 21 der Führungszapfen 46) auf, welche in entsprechende Aussparungen in der Abdeckwandung 19 eingreifen und der zusätzlichen Lagefixierung der einzelnen Steckelemente dienen. Anstatt solcher Führungszapfen (46) könnten auch Führungsnuten in den einzelnen Steckelementen angeformt sein, in welche entsprechende Ausformungen einer Abdeckwandung eingreifen.

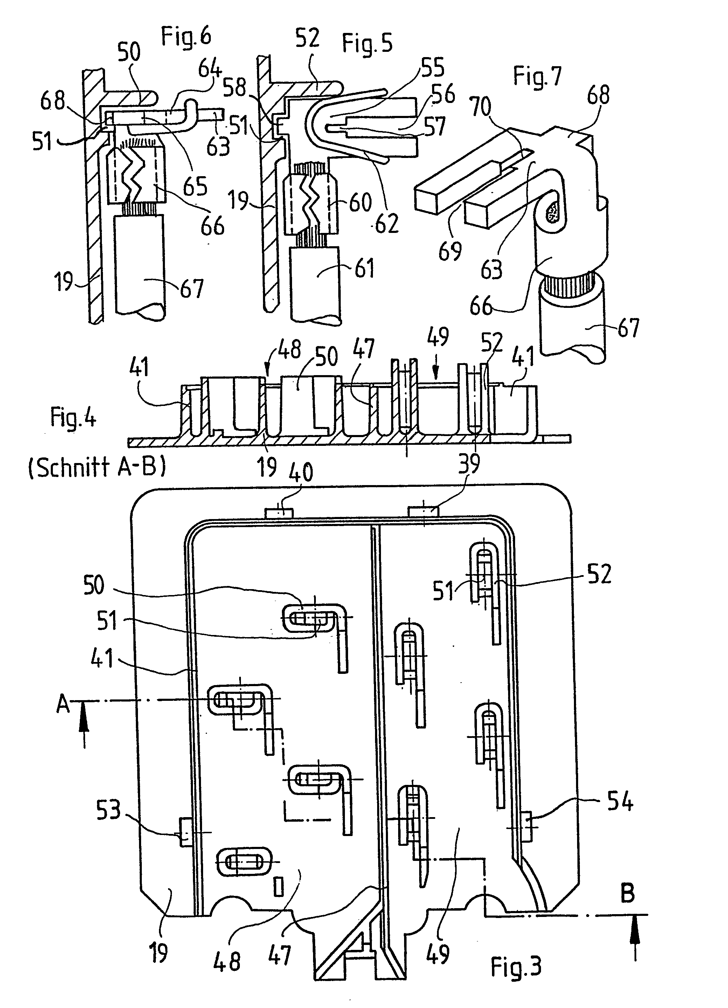

In den Figuren 1 und 2 ist im wesentlichen nur die ins Einschubinnere gerichtete Wandungsseite der Abdeckwandung 19 erkennbar. Die Figur 3 veranschaulicht nun – in einer Senkrechtsprojektion – die bisher nicht sichtbar gewesene Wandungsseite dieser Abdeckwandung 19. Erkennbar ist der bereits erwähnte, im Abstand von ihrer Aussenrandung verlaufende Kragen 41, welcher sich entlang beider Seitenrandungen und der nach oben gerichteten Randung der Abdeckwandung 19 erstreckt. Und auch hier, gegenüberliegend dem Trennsteg 33 in der Rückwandung 18 (siehe Fig. 2), ist ein Trennsteg 47 angeformt, so dass sich in miteinander montierter Lage der Abdeckwandung 19 und der Rückwandung 18 zwei nach unten hin wenigstens teilweise offene Kammern 48 und 49 bilden. Innerhalb der Kammer 48, umgeben von einem Teil des Kragens 41 und im übrigen vom Trennsteg 47, weist die Abdeckwandung 19 Ausformungen 50 auf, welche der Aufnahme der Steckelemente für die Leistungsabführung dienen, im vorliegenden Fall ist die bezifferte Ausformung 50 dem Steckelement 24 (siehe Fig. 2) zugeordnet. Diese Ausformungen 50 bilden jeweils eine Art Tasche, in welche die zugeordneten Steckelemente eingefügt werden können, wobei im Bodenbereich dieser Taschen zusätzliche Aussparungen 51 eingeformt sind, in welche die bereits erwähnten Führungszapfen (am Steckelement 21 in Figur 2 der Führungszapfen 46) eingefügt werden können. Die in der Kammer 48 vorhandenen Ausformungen 50 bilden im wesentlichen horizontal verlaufende Taschen, im Gegensatz dazu sind die in der Kammer 49 gelegenen Ausformungen 52 so angeordnet, dass sie zwar ebenfalls taschenartige Aufnahmeräume für die in Figur 2 gezeigten Steckelemente 21 bis 23 bilden, welche jedoch einen vertikalen Verlauf zeigen. Wie bereits erwähnt, ist dementsprechend auch die wesentliche Erstreckungsebene der Steckelemente 21 bis 23 vertikal.

Erkennbar in der Figur 3 sind noch die bereits genannten Rastmittel 39 und 40, nun aber auch weitere seitliche Rastmittel 53 und 54, deren Existenz bereits angedeutet wurde, die aber in den bisher beschriebenen Darstellungen nicht erkennbar gewesen sind.

Einen Schnitt entlang der in der Figur 3 angedeuteten stufenartigen Schnittlinie A-B durch die Abdeckwandung 19 veranschaulicht die Figur 4. Erkennbar die eigentliche Abdeckwandung 19, der Kragen 41 sowie der Trennsteg 47, welcher zur Bildung der Kammern 48 und 49 beiträgt. Teilweise im Schnitt erkennbar sind nun auch die Ausformungen 50 und 52, wobei ersichtlich ist, dass diese Ausformungen in ihrer Höhe durchaus unterschiedlich abgestuft und im übrigen abweichend von der Höhe des Kragens 41 beziehungsweise des Trennsteges 47 ausgeführt werden können.

Nun zur Figur 5. Sie veranschaulicht in gegenüber den Darstellungen in den vorher erläuterten Figuren vergrössertem Massstab einen Schnitt durch einen kleinen Teilbereich der Abdeckwandung 19 mit einer Ausformung 52, an welche sich ein vertikal angeordnetes Steckelement 55 anlehnt. Dieses Steckelement 55 ist mit einem (in der Darstellung) horizontal verlaufenden Aufnahmeschlitz 56 versehen, welcher sich an seinem der Abdeckwandung 19 zugekehrten Ende verjüngt und in einer schmalen Aufschlitzung 57 mündet. Diese schmale Aufschlitzung 57 vermag die Auffederung des Aufnahmeschlitzes 56 zu verbessern. An seinem dem Aufnahmeschlitz 56 entgegengerichteten Ende weist das Steckelement 55 einen Führungszapfen 58 auf, welcher sich in eine der bereits erwähnten Aussparungen 51 einfügt, die ihrerseits im Bereich des Ausformung 52 beziehungsweise angrenzend an diese gebildet ist. An das Steckelement 55 seitlich angeformt ist eine Hülse 60, in welcher das Ende eines Kabels 61 eingelegt und verquetscht und gegebenenfalls auch noch verlötet ist. Ersichtlich ist, dass die (nicht gezeigte) Mittelachse der Hülse 60 und die Längsachse des Aufnahmeschlitzes 56 senkrecht zueinander, jedoch in Richtung der wesentlichen Erstreckungsebene des Steckelementes 55 verlaufen, im Gegensatz zu dem in den Figuren 6 und 7 dargestellten Steckelement, welches nachfolgend noch beschrieben werden wird.

Zuvor erwähnt werden soll jedoch noch eine Bügelfeder 62, welche mit ihren abgekröpften freien Schenkelenden in nicht im einzelnen erkennbaren Nuten des Steckelementes 55 zwecks ihrer Halterung einliegt und im übrigen die beiderseits des Aufnahmeschlitzes 56 verlaufenden Schenkel des Steckelementes 55 in zusammendrückendem Sinne federnd beaufschlagt. Durch diese Massnahme ist die Kontaktkraft zwischen dem Steckelement 55 und einem aufzunehmenden (nicht dargestellten) Stromschienenelement verstärkbar.

Die Figur 6 veranschaulicht einen weiteren Schnitt durch die Abdeckwandung 19, hier jedoch in einer Schnittebene, welche ein Steckelement 63 mit im wesentlichen horizontaler Erstreckungsebene, bezogen auf die Darstellung, erfasst. Dieses Steckelement 63 ist in einer Ausformung 50 gelegen und ebenfalls mit einem Aufnahmeschlitz und einer daran anschliessenden Aufschlitzung versehen, was durch zwei unterbrochene Linien (unsichtbare Kanten 64 und 65) angedeutet ist. Und auch dieses Steckelement 63 weist eine seitlich angeformte Hülse 66 auf, welche jedoch im Bereich des Verbindungsteiles von Hülse 66 und eigentlichem Steckelement 63 abgekantet ist, so dass die (gedachte) Mittelachse der angeformten Hülse 66 nicht nur senkrecht zur (gedachten) Längsachse des Aufnahmeschlitzes verläuft, sondern auch senkrecht zur wesentlichen Erstreckungsebene des Steckelementes 63 steht. Hierdurch ist auch bei einer derartigen Lage eines Steckelementes eine Kabelabführung nach unten hin möglich, wie der Verlauf eines Kabels 67 an beziehungsweise in der Hülse 66 zeigt. An seinem dem Aufnahmeschlitz entgegengerichteten Ende weist auch dieses Steckelement 63 einen Führungszapfen 68 auf, welcher ebenfalls in einer Aussparung 51 einliegt.

Zur besseren Erkennbarkeit der Formgebung des Steckelementes 63 ist dieses noch einmal – und zwar nun in perspektivischer und hinsichtlich des Verlaufes des Aufnahmeschlitzes zum Betrachter gekehrter Sicht – in Figur 7 wiedergegeben. Erkennbar hier der bereits erwähnte und nun mit der Ziffer 69 versehene Aufnahmeschlitz mit seiner daran angrenzenden schmalen Aufschlitzung 70, ferner der Führungszapfen 68 und schliesslich die aus der wesentlichen Erstreckungsebene des Steckelementes 63 abgewinkelte Hülse 66 mit dem darin aufgenommenen Kabel 67. Weitere Erläuterungen hierzu erübrigen sich.

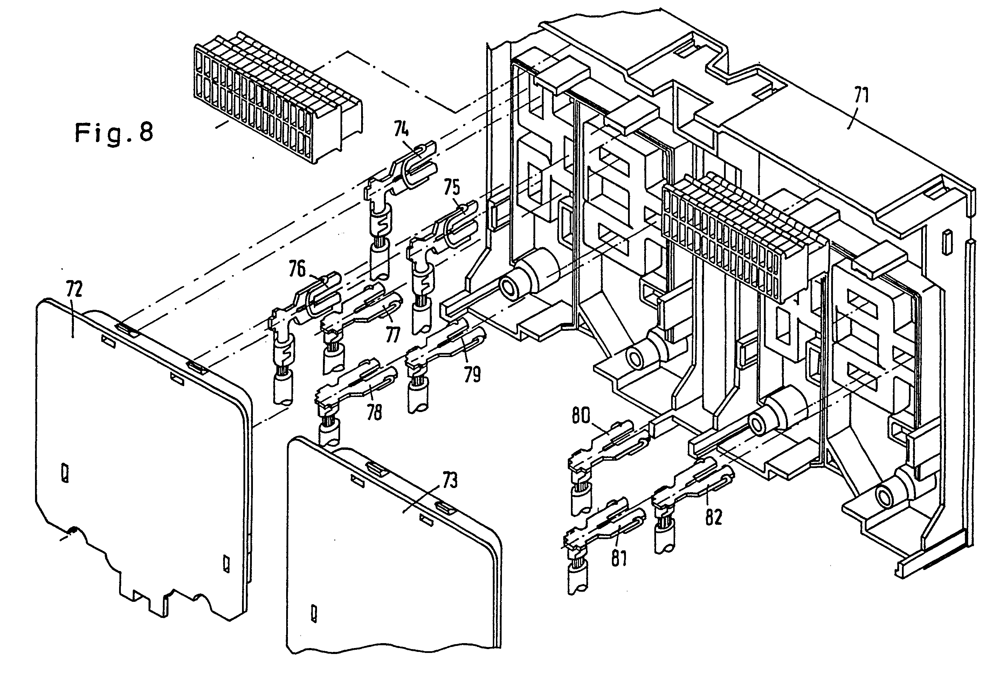

Die Figur 8 schliesslich veranschaulicht eine komplette Baugruppe einer Rückwandung 71, vergleichbar derjenigen Darstellung in Figur 2. Im Unterschied zu der Ausführung gemäss Figur 2 weist diese Rückwandung eine praktisch doppelt so grosse Breite auf, wie die zuvor erläuterte und in den Figuren 1 bis 3 gezeigte Rückwandung 18. Bemerkenswert ist, dass diese Rückwandung 71 nunmehr mit zwei Abdeckwandungen 72 und 73 ausgestattet ist, welche derjenigen in den Figuren 1 bis 3 (dort mit 19 beziffert) völlig gleichen können. Auch zwischen diesen Abdeckwandungen 72 und 73 und der ihnen zugeordneten Rückwandung 71 sind Steckelemente anordenbar, in einem solchen Falle genügen aber für die Leistungszuführung insgesamt drei Steckelemente, nämlich die mit den Ziffern 74 bis 76 gekennzeichneten und in ihrem wesentlichen Verlauf vertikal gestellten Elemente. Für die Leistungsabführung hingegen finden hier insgesamt sechs Steckelemente 77 bis 82 Verwendung, nämlich für jede Längshälfte der Rückwandung 71 beziehungsweise hinter jeder der Abdeckwandungen 72 und 73 je drei solcher Elemente. Der übrige Aufbau gleicht im Prinzip demjenigen der Rückwandung 18 gemäss den Figuren 1 bis 3, so dass sich Erläuterungen hinsichtlich der Bestückung, der Ausformungen und des Zusammenbaus dieser kompletten Rückwandung 71 erübrigen.

Wie bereits eingangs der Figurenbeschreibung zum Ausdruck gebracht, veranschaulichen die Darstellungen lediglich Ausführungsbeispiele für die Verwirklichung des Erfindungsgedankens und seiner Ausgestaltungsmöglichkeiten. Mannigfache Abweichungen von diesen Darstellungen sind – ohne den Erfindungsgedanken zu verlassen – denkbar und realisierbar, so beispielsweise eine noch mehr verbreiterte Rückwandung mit drei oder gar mehr einzelnen Abdeckwandungen oder stattdessen die Verwendung jeweils nur einer einzigen, allerdings auch verbreiterten Abdeckwandung bei — wie in Figur 8 angedeutet – breiten oder noch breiter als hier gezeigten Rückwandungen. Auch können die gezeigten und erläuterten Steckelemente in ihrer Ausführung von den gezeigten Ausführungsformen abweichend gestaltet werden, und zwar im Rahmen der Ansprüche 8 bis 11.

**Patentansprüche**

1. Einschub (10) für elektrische Anlagenschränke, enthaltend ein Bodenteil (11), eine Frontwandung (12) sowie eine Rückwandung (18) und gegebenenfalls weitere Wandungen zur oberen und seitlichen Abdeckung (16, 17) wobei die Rückwandung (18) ausser der Abdeckung des Einschubinneren auch noch der Halterung von Vielfach-Steckleisten (20) für Steuer- und Signalleitungen sowie der Halterung oder Führung von Steckelementen (21 … 26; 55; 63; 74 .. 82) für Leistungszuführungen und -abführungen dient und mit Öffnungen für deren Durchtritt versehen ist, dadurch gekennzeichnet, dass nahe der ins Einschubinnere gerichteten Wandungsfläche der Rückwandung (18; 71) wenigstens eine zusätzliche Abdeckwandung (19; 53; 72, 73) fest angeordnet ist und dass zwischen dieser Abdeckwandung und der Rückwandung die Steckelemente (21 … 26; 55; 63; 74 … 82) für die Leistungszu- und -abführungen sowie daran befestigte Enden von Stromleitern (61, 67) anordenbar und in ihrer Lage fixierbar sind, wobei die Abdeckwandung mindestens der zusätzlichen Lagefixierung, Halterung oder Abstützung der Steckelemente dient.

2. Einschub nach Anspruch 1, dadurch gekennzeichnet, dass an wenigstens einer der einander zugekehrten Wandungsflächen der Rückwandung (18; 71) und der Abdeckwandung (19; 53; 72, 73) an oder nahe von deren äusseren Randungsbereichen ein vorspringender Kragen (27, 41) angeformt ist, welcher sich längs der beiden seitlichen Randungen und der oberen Randung erstreckt und in miteinander montierter Lage der beiden Wandungen eine nach unten hin offene Kammer bildet.

3. Einschub nach Anspruch 2, dadurch gekennzeichnet, dass an wenigstens einer der einander zugekehrten Wandungsflächen der Abdeckwandung (19; 53; 72, 73) und der Rückwandung (18; 71) mindestens ein Trennsteg (33, 47) angeformt ist, welcher an den Kragen (27, 41) angrenzt, etwa das gleiche Höhenmass wie dieser Kragen aufweist und der Bildung wenigstens zweier Kammern (48, 49) dient.

4. Einschub nach einem der Ansprüche 1 bis 3, dadurch gekennzeichnet, dass an wenigstens einer der einander zugekehrten Wandungsflächen der Abdeckwandung (19; 53; 72, 73) und der Rückwandung (18, 71) Ausformungen (50, 51, 52, 54, 58, 68) in Gestalt von Stegen, Nocken, Nuten, Aussparungen und dergleichen angeordnet sind, welche der Halterung und Lagefixierung der aufzunehmenden Steckelemente (21 ... 26; 55; 63; 74 ... 82) dienen.

5. Einschub nach Anspruch 4, dadurch gekennzeichnet, dass beim Vorhandensein eines Kragens (27, 41) gemäss Anspruch 2 an der Abdeckwandung (29; 53; 72, 73) und/oder der Rückwandung (18; 71) die Ausformungen (50, 51, 52, 54, 58, 68) zur Halterung und Lagefixierung der Steckelemente (21 ... 26, 55, 63, 74 ... 84) innerhalb der vom Kragen weitgehend umschlossenen Wandungsfläche gelegen sind.

6. Einschub nach einem der Ansprüche 1 bis 5, dadurch gekennzeichnet, dass die Abdeckwandung (19; 53; 72, 73) und die Rückwandung (18; 71) ausschliesslich mit Hilfe von angeformten oder angegliederten Rastmitteln (35 ... 38; 39, 40, 53, 54) oder zusätzlich zu anderen Verbindungsmassnahmen mittels solcher Rastmittel miteinander verbunden sind.

7. Einschub nach Anspruch 6, dadurch gekennzeichnet, dass die Rastmittel (35 ... 38; 39, 40, 53, 54) in Form von Rastnasen, Rastöffnungen oder dergleichen unmittelbar von wenigstens einem der in Anspruch 2 genannten Kragen (27, 41) ausgehen beziehungsweise daran angeformt sind oder jeweils nahe des Kragens gelegen sind.

8. Steckelement für einen Einschub nach einem der Ansprüche 1 bis 7, dadurch gekennzeichnet, dass es als im wesentlichen ebenes Stanz- oder Formteil mit einem Aufnahmeschlitz (42; 46 + 57; 69 + 70) für eine Stromschiene oder ein Gegensteckelement ausgebildet und mit einer (bezogen auf den Längsverlauf des Aufnahmeschlitzes) seitlich angeformten Hülse (43, 44; 60, 66) für die Aufnahme des Endes eines Kabels versehen ist, deren Mittelachse quer beziehungsweise etwa senkrecht zur Längsachse des Aufnahmeschlitzes verläuft.

9. Steckelement nach Anspruch 8, dadurch gekennzeichnet, dass die seitlich angeformte Hülse (43, 44; 60, 66) gegenüber der mit dem Aufnahmeschlitz (69 + 70) versehenen Erstreckungsebene des Steckelementes (24 ... 26; 65; 77 ... 82) abgewinkelt ist, so dass die Mittelachse der Hülse etwa senkrecht zu der genannten Erstreckungsebene steht.

10. Steckelement nach Anspruch 8 oder 9, dadurch gekennzeichnet, dass in an sich bekannter Weise im Bereich seines Aufnahmeschlitzes (42; 56 + 57; 69 + 70) eine gespannte Bügelfeder (45; 62) oder eine aufgetrennte Ringfeder angeordnet ist, deren Federkraft einer Aufweitung des Aufnahmeschlitzes entgegenwirkt.

11. Steckelemente nach einem der Ansprüche 8 bis 10, dadurch gekennzeichnet, dass an seinem dem Aufnahmeschlitz (42; 56 + 57; 69 + 70) entgegengerichteten Ende ein Führungszapfen (56, 58, 68) oder eine Führungsnut ausgebildet ist.

**Claims**

1. Plug-in rack (10) for electrical switchgear cabinets, containing a bottom part (11), a front wall (12), a rear wall (18) and, if appropriate, further walls for upper and lateral covering (16, 17), the rear wall (18) serving not only for covering the interior of the plug-in rack, but also for mounting multiple plug contact strips (20) for control and signal lines and for mounting or guiding plug elements (21 to 26; 55; 63; 74 to 82) for incoming and outgoing power leads, and being equipped with orifices for the passage of these, characterized in that at least one additional covering wall (19; 53; 72, 73) is arranged fixedly near the wall surface of the rear wall (18; 71) facing the interior of the plug-in rack, and in that the plug elements (21 to 26; 55; 63; 74 to 82) for the incoming and outgoing power leads and ends of current conductors (61, 67) attached thereto can be arranged and fixed in position between this covering wall and the rear wall, the covering wall serving at least for the additional fixing in position, mounting or support of the plug elements.

2. Plug-in rack according to Claim 1, characterized in that a projecting collar (27, 41) is formed on at least one of the mutually facing wall surfaces of the rear wall (18; 71) and of the covering wall (19; 53; 72, 73), at or near their outer edge regions, extends along the two lateral edges and the upper edge and, in the position in which the two walls are fitted together, forms a chamber open towards the bottom.

3. Plug-in rack according to Claim 2, characterized in that at least one separating web (33, 47) is formed on at least one of the mutually facing wall surfaces of the covering wall (19; 53; 72, 73) and of the rear wall (18; 71), adjoins the collar (27, 41), has approximately the same height as this collar and serves for forming at least two chambers (48, 49).

4. Plug-in rack according to one of Claims 1 to 3, characterized in that shaped-out portions (50, 51, 52, 54, 58, 68) in the form of webs, projections, slots, recesses and the like are arranged on at least one of the mutually facing wall surfaces of the covering wall (19; 53; 72, 73) and of the rear wall (18, 71) and serve for mounting and fixing in position the plug elements (21 to 26; 55; 63; 74 to 82) to be received.

5. Plug-in rack according to Claim 4, characterized in that, when a collar (27, 41) according to Claim 2 is present on the covering wall (29; 53; 72, 73) and/or the rear wall (18; 71), the shaped-out portions (50, 51, 52, 54, 58, 68) for mounting and fixing in position the plug elements (21 to 26, 55, 63, 74 to 84) are located within the wall surface largely enclosed by the collar.

6. Plug-in rack according to one of Claims 1 to 5, characterized in that the covering wall (19; 53; 72, 73) and the rear wall (18; 71) are connected to one another by means of formed-on or attached engaging means (35 to 38; 39, 40, 53, 54) only or by means of such engaging means in addition to other connecting measures.

7. Plug-in rack according to Claim 6, characterized in that the engaging means (35 to 38; 39, 40, 53, 54) in the form of engaging noses, engaging orifices or the like start directly from at least one of the collars (27, 41) mentioned in Claim 2 or are formed thereon or are located in each case near the collar.

8. Plug element for a plug-in rack according to one of Claims 1 to 7, characterized in that it is designed as an essentially plane stamped of shaped article with a receiving slit (42; 46 and 57; 69 and 70) for a busbar or a mating plug element and is equipped with a sleeve (43, 44; 60, 66) which is formed on laterally, relative to the longitudinal extent of the receiving slit, and is intended for receiving the end of a cable and the centre axis of which extends transversely or approximately perpendicularly relative to the longitudinal axis of the receiving slit.

9. Plug element according to Claim 8, characterized in that the sleeve (43, 44; 60, 66) formed on laterally is angled relative to the plane of extent of the plug element (24 to 26; 65; 77 to 82) provided with the receiving slit (69 and 70), so that the centre axis of the sleeve is approximately perpendicular to the said plane of extent.

10. Plug element according to Claim 8 or 9, characterized in that, in a way known per se, arranged in the region of its receiving slit (42; 56 and 57; 69 and 70) is a tensioned bowspring (45; 62) or an opened annular spring, the spring force of which counteracts a widening of the receiving slit.

11. Plug element according to one of Claims 8 to 10, characterized in that a guide lug (56, 58, 68) or a guide slot is formed on its end facing away from the receiving slit (42; 56 and 57; 69 and 70).

**Revendications**

1. Tiroir (10) pour armoires d'installations électriques, comportant une partie fond (11), une paroi avant (12) et une paroi arrière (18), et éventuellement d'autres parois de couverture supérieure et latérale (16, 17), la paroi arrière (18) servant non seulement à couvrir l'intérieur du tiroir mais aussi à maintenir des connecteurs multibroches (20) pour lignes de commande et de signal, ainsi qu'à maintenir ou guider des éléments de connexion à embrochage (21 ... 26; 55, 63; 74 ... 82) pour arrivées et sorties de puissance, et étant munie d'ouvertures pour leur passage, caractérisé par le fait qu'au moins une paroi de couverture supplémentaire (19; 53; 72, 73) est agencée en position fixe près de la surface, dirigée vers l'intérieur du tiroir, de la paroi arrière (18; 71), et par le fait que les éléments de connexion à embrochage (21 ... 26; 55; 63; 74 ... 82) pour les arrivées et sorties, ainsi que les extrémités de conducteurs (61, 67) qui y sont fixées, peuvent être agencés et immobilisés en position entre cette paroi de couverture et la paroi arrière, ladite paroi de couverture servant en outre au moins à positionner, maintenir ou soutenir les éléments de connexion à embrochage.

2. Tiroir selon revendication 1, caractérisé par le fait qu'un rebord saillant (27, 41) est formé sur au moins l'une des surfaces mutuellement en regard de la paroi arrière (18; 71) et de la paroi de couverture (19; 53; 72, 73), à l'endroit ou à proximité de leurs marges extérieures, ce rebord s'étendant le long des deux bords latéraux et du bord supérieur, et formant une chambre ouverte vers le bas lorsque les deux parois sont toutes deux en position montée.

3. Tiroir selon revendication 2, caractérise par le fait que, sur au moins l'une des surfaces mutuellement en regard de la paroi de couverture (19; 53; 72, 73) et de la paroi arrière (18; 71), est formée une nervure séparatrice (33, 47) qui jouxte le rebord (27, 41), présente à peu prés la même côte de hauteur que celui-ci et sert à former au moins deux chambres (48, 49).

4. Tiroir selon l'une quelconque des revendications 1 à 3, caractérisé par le fait que, sur au moins l'une des surfaces mutuellement en regard de la paroi de couverture (19; 53; 72, 73) et la paroi arrière (18, 71), sont agencés des reliefs ou creux (50, 51, 52, 54, 58, 68) sous forme de nervures, mentonnets, rainures, évidements et analogues, qui servent à maintenir et positionner des éléments de connexion à embrochage destinés à y être reçu (21 ... 26; 55; 63; 74 ... 82).

5. Tiroir selon revendication 4, caractérisé par le fait qu'un rebord (27, 41) selon la revendication 2 étant présent sur la paroi de couverture (29; 53; 72, 73) et/ou sur la paroi arrière (18; 71), les reliefs ou creux (50, 51, 52, 54, 58, 68) pour maintenir et positionner les éléments de connexion à embrochage (21 ... 26; 55, 63, 74 ... 84) sont situés à l'intérieur de la surface de paroi entourée sensiblement complètement par le rebord.

6. Tiroir selon l'une quelconque des revendications 1 à 5, caractérisé par le fait que la paroi de couverture (19; 53; 72, 73) et la paroi arrière (18; 71) sont assemblées l'une à l'autre exclusivement à l'aide de moyens de verrouillage par encliquetage (35 ... 38; 39, 40, 53, 54) formés ou rapportés sur elles, ou à l'aide de tels moyens de verrouillage par encliquetage s'ajoutant à d'autres moyens d'assemblage.

7. Tiroir selon revendication 6, caractérisé par le fait que les moyens de verrouillage par encliquetage (35 ... 38; 39, 40, 53, 54) ont la forme de becs ou d'ouvertures d'encliquetage, ou analogues, et partent directement d'au moins l'un des rebords (27, 41) mentionnés dans la revendication 2, ou y sont formés, ou sont situés à proximité de ce rebord.

8. Elément de connexion à embrochage pour tiroir selon l'une quelconque des revendications 1 à 7, caractérisé par le fait qu'il est réalisé sous la forme d'une pièce sensiblement plane, découpée ou façonnée, dotée d'une fente réceptrice (42, 46 + 57; 69 + 70) pour recevoir une barre de courant ou un élément de connexion à embrochage conjugué, et est muni d'un manchon (43, 44; 60, 66) formé latéralement (en considérant la longueur de la fente réceptrice), pour recevoir l'extrémité d'un câble, l'axe central de ce manchon étant dirigé transversalement ou sensiblement perpendiculairement à l'axe longitudinal de la fente réceptrice.

9. Elément de connexion à embrochage selon revendication 8, caractérisé par le fait que le manchon formé latéralement (43, 44; 60, 66) est disposé en équerre par rapport au plan dans lequel ledit élément de connexion à embrochage (24 ... 26; 65; 77 ... 82) comporte la fente réceptrice (69 + 70), de sorte que l'axe central de ce manchon se trouve sensiblement perpendiculaire audit plan.

10. Elément de connexion à embrochage selon revendication 8 ou 9, caractérisé par le fait qu'un ressort tendu en forme d'étrier (45; 62) ou un ressort annulaire fendu, dont la force élastique s'oppose à un élargissement de la fente réceptrice, est agencé de manière connue en soi dans la région de cette fente réceptrice (42; 56 + 57; 69 + 70).

11. Elément de connexion à embrochage selon l'une quelconque des revendications 8 à 10, caractérisé par le fait qu'un téton de guidage (58, 68) ou une rainure de guidage est aménagé à son extrémité située à l'opposé de la fente réceptrice (42; 56 + 57; 69 + 70).

Fig.1

# Fig. 2

0 109 584

Fig.6  Fig.5  Fig.7

Fig.4

(Schnitt A-B)

Fig.3

15

Fig.8

0109584